(19) Europäisches Patentamt / European Patent Office / Office européen des brevets

(11) **EP 3 912 961 A1**

(12) **EUROPEAN PATENT APPLICATION**
published in accordance with Art. 153(4) EPC

(43) Date of publication:
**24.11.2021 Bulletin 2021/47**

(51) Int Cl.:
*C01B 32/205* (2017.01)   *H01M 4/587* (2010.01)

(21) Application number: 20741968.0

(22) Date of filing: **14.01.2020**

(86) International application number:
**PCT/JP2020/000832**

(87) International publication number:
**WO 2020/149252 (23.07.2020 Gazette 2020/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.01.2019   JP 2019004662**

(71) Applicant: **ENEOS Corporation**
**Chiyoda-ku**
**Tokyo 100-8162 (JP)**

(72) Inventors:
• **SUZUKI, Takashi**
**Tokyo 100-8162 (JP)**

• **MAEDA, Takashi**
**Tokyo 100-8162 (JP)**
• **KARAKANE, Mitsuo**
**Tokyo 100-8162 (JP)**
• **SHIRAI, Takahiro**
**Tokyo 100-8162 (JP)**
• **KAWACHI, Hiroshi**
**Tokyo 100-8162 (JP)**
• **KIUCHI, Noriyuki**
**Tokyo 100-8162 (JP)**

(74) Representative: **Gilani, Anwar et al**
**Venner Shipley LLP**
**Byron House**
**Cambridge Business Park**
**Cowley Road**
**Cambridge CB4 0WZ (GB)**

(54) **SYNTHETIC GRAPHITE MATERIAL, SYNTHETIC GRAPHITE MATERIAL PRODUCTION METHOD, NEGATIVE ELECTRODE FOR LITHIUM ION SECONDARY BATTERY, AND LITHIUM ION SECONDARY BATTERY**

(57)    Provided is a synthetic graphite material, in which a size L (112) of a crystallite in a c-axis direction as calculated from a (112) diffraction line obtained by an X-ray wide angle diffraction method is in a range of 4 to 30 nm, a surface area based on a volume as calculated by a laser diffraction type particle size distribution measuring device is in a range of 0.22 to 1.70 $m^2/cm^3$, an oil absorption is in a range of 67 to 147 mL/100 g, and a nitrogen adsorption specific surface area is in a range of 3.1 to 8.2 $m^2/g$.

FIG. 1

**Description**

[Technical Field]

The present invention relates to a synthetic graphite material, a synthetic graphite material production method, a negative electrode for a lithium ion secondary battery, and a lithium ion secondary battery.
Priority is claimed on Japanese Patent Application No. 2019-004662, filed January 15, 2019, the content of which is incorporated herein by reference.

[Background Art]

Lithium ion secondary batteries are used for industrial purposes such as applications for automobiles and power storage of system infrastructures.
As a negative electrode material of a lithium ion secondary battery, graphite such as a synthetic graphite material has been used (see, for example, Patent Document 1).
Batteries used for applications for automobiles are used in a wide temperature range from a low temperature of 0°C or lower to a high temperature of 60°C or higher. However, a lithium ion secondary battery for which graphite is used as a negative electrode material has a disadvantage that lithium metal is likely to be deposited on the negative electrode at a low temperature of 0°C or lower. In a case where lithium metal is deposited on the negative electrode, the amount of lithium ions that can move between the positive electrode and the negative electrode decreases. Therefore, the capacity of the lithium ion secondary battery is degraded.
It was previously reported that capacity degradation proceeds due to a difference in charge and discharge efficiency between a positive electrode and a negative electrode in a case where lithium metal is not deposited on the negative electrode (see, for example, Non Patent Document 1).

[Citation List]

[Patent Document]

[Patent Document 1]
Japanese Patent No. 5415684

[Non Patent Document]

[Non Patent Document 1]
The 51st Battery Symposium in Japan 3G15 (November 8, 2010)
[Non Patent Document 2]
"Carbon Material for Negative Electrode for Lithium Ion Secondary Batteries" pp. 3 to 4 (published by Realize Corporation, October 20, 1996)
[Non Patent Document 3]
Carbon, 1981 (No. 105), pp. 73 to 81

[Summary of Invention]

[Technical Problem]

In lithium ion batteries obtained by using graphite as a negative electrode material, an object thereof is to suppress capacity degradation due to charging and discharging of the batteries at a low temperature of 0°C or lower. In particular, industrial lithium ion batteries used for applications for automobiles and power storage of system infrastructures are problematic because these batteries are used in a wide temperature range.
The present invention has been made in consideration of the above-described circumstances, and an object thereof is to provide a synthetic graphite material which is used as a material of a negative electrode for a lithium ion secondary battery to obtain a lithium ion secondary battery whose discharge capacity hardly deteriorates even if charge and discharge are repeated at a low temperature of 0°C or lower.
Further, an object of the present invention is to provide a production method of the synthetic graphite material, a negative electrode for a lithium ion secondary battery which contains the synthetic graphite material, and a lithium ion secondary battery which is formed of the negative electrode and has a discharge capacity that is unlikely to be degraded even in a case where charging and discharging are repeated at a low temperature of 0°C or lower.

[Solution to Problem]

[1] A synthetic graphite material, in which a size L (112) of a crystallite in a c-axis direction as calculated from a (112) diffraction line obtained by an X-ray wide angle diffraction method is in a range of 4 to 30 nm, a surface area based on a volume as calculated by a laser diffraction type particle size distribution measuring device is in a range of 0.22 to 1.70 $m^2/cm^3$, an oil absorption is in a range of 67 to 147 mL/100 g, and a nitrogen adsorption specific surface area is in a range of 3.1 to 8.2 $m^2/g$.

[2] A production method of the synthetic graphite material according to [1], including at least: a step of performing a coking treatment on a raw material oil composition by performing a delayed coking process to generate a coking coal composition; a step of pulverizing the coking coal composition to obtain coking coal powder; a step of performing a heat treatment on the coking coal powder to obtain graphite powder; and a step of pulverizing the graphite powder.

[3] The production method according to [2], in which the raw material oil composition has a normal paraffin content of 5 to 20% by mass, and an aromatic index fa acquired by a Knight method is in a range of 0.3 to 0.65.

[4] A negative electrode for a lithium ion secondary battery including: the synthetic graphite material according to [1].

[5] A lithium ion secondary battery including: the negative electrode according to [4].

[Advantageous Effects of Invention]

The lithium ion secondary battery which has a negative electrode containing the synthetic graphite material of the present invention has a discharge capacity that is unlikely to be degraded even in a case where charging and discharging are repeated at a low temperature of 0°C or lower.

[Brief Description of Drawings]

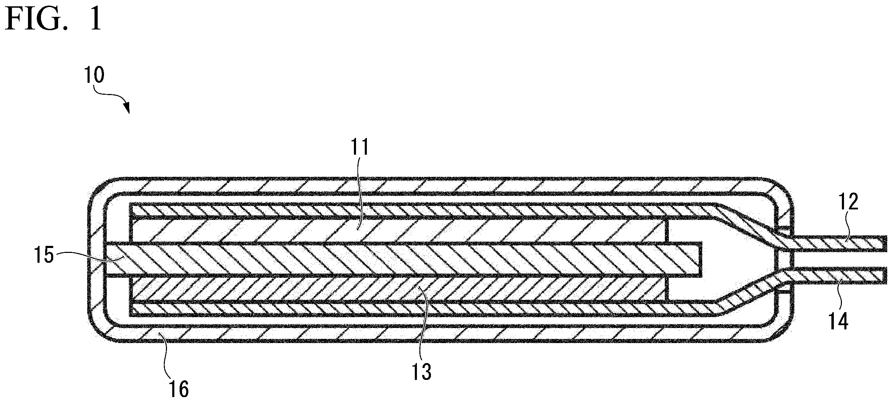

Fig. 1 is a schematic cross-sectional view showing an example of a lithium ion secondary battery according to the present embodiment.

[Description of Embodiments]

Hereinafter, a synthetic graphite material, a synthetic graphite material production method, a negative electrode for a lithium ion secondary battery, and a lithium ion secondary battery of the present invention will be described in detail. Further, the present invention is not limited to embodiments described below.

[Synthetic graphite material]

The synthetic graphite material of the present embodiment satisfies all the following conditions (1) to (4).

(1) A size L (112) of a crystallite in a c-axis direction as calculated from a (112) diffraction line obtained by an X-ray wide angle diffraction method is in a range of 4 to 30 nm.

(2) The surface area based on the volume as calculated by a laser diffraction type particle size distribution measuring device is in a range of 0.22 to 1.70 $m^2/cm^3$.

(3) The oil absorption is in a range of 67 to 147 mL/100 g.

(4) The nitrogen adsorption specific surface area is in a range of 3.1 to 8.2 $m^2/g$.

The size L (112) of a crystallite in the c-axis direction as calculated from the (112) diffraction line obtained by the X-ray wide angle diffraction method under the above-described condition (1) is the size L (112) measured and calculated in conformity with the "method of measuring lattice constant and crystallite size of synthetic graphite material" of JIS R 7651 (2007). Hereinafter, the size L (112) measured and calculated by this method may also be simply referred to as the size L (112).

The surface area based on the volume as calculated by the laser diffraction type particle size distribution measuring device under the above-described condition (2) is the surface area based on the volume calculated in conformity with "5.5 Calculation of surface area based on volume" in "Representation of results of particle size analysis-Part 2: Calculation of average particle sizes/diameters of moments from particle size distributions" of JIS Z 8819-2 (2001).

Hereinafter, the surface area based on the volume measured and calculated by this method may also be simply referred to as the "surface area based on the volume".

The oil absorption under the above-described condition (3) is the oil absorption measured and calculated in conformity with "Oil absorption- Section 1: Refined linseed oil method" of JIS K 5101-13-1 (2004). Hereinafter, the oil absorption measured and calculated as described above may also be simply referred to as the "oil absorption".

The nitrogen adsorption specific surface area under the above-described condition (4) is a nitrogen adsorption specific surface area measured and calculated in conformity with "Determination of the Specific Surface Area of Powders (Solids) by Gas Adsorption-BET Method" of JIS Z 8830 (2013). The specific surface area measured and calculated by this method may be simply referred to as the "specific surface area".

As a result of intensive examination repeatedly conducted by the inventors by focusing on the size of a crystallite in the c-axis direction, the surface area based on the volume, the oil absorption, and the nitrogen adsorption specific surface area of the synthetic graphite material, it was found that degradation of the discharge capacity in a case where charging and discharging are repeated at a temperature of 0°C or lower can be suppressed by employing a lithium ion secondary battery having a negative electrode that contains a synthetic graphite material satisfying all the above-described conditions (1) to (4), thereby completing the present invention.

The synthetic graphite material satisfying the condition (1) that "the size L (112) is in a range of 4 to 30 nm" has crystals which are highly developed. The synthetic graphite material having a size L (112) of 4 to 30 nm has a graphitization degree suitable for a negative electrode of a lithium ion secondary battery. Since the reversible capacity increases as the size L (112) increases, the size L (112) of the synthetic graphite material is preferably 4 nm or greater.

In the synthetic graphite material having a size L (112) of less than 4 nm, the crystal structure is insufficiently developed. Therefore, the lithium ion secondary battery having a negative electrode that contains a synthetic graphite material having a size L (112) of less than 4 nm is not preferable from the viewpoint that the capacity is a small capacity (see, for example, Non Patent Document 2).

The above-described condition (2) is a value obtained by expressing the particle diameter and the distribution of the synthetic graphite material as a numerical value. The synthetic graphite material used for a negative electrode of a lithium ion secondary battery is typically in the form of particles (powder). The particle diameter (particle size) of the synthetic graphite material has a distribution. The relationship between the particle diameter and the distribution (particle size distribution) of the synthetic graphite material is expressed as a histogram (surface). The value obtained by expressing the particle size distribution of the synthetic graphite material as a numerical value (point) is the surface area based on the volume.

The synthetic graphite material satisfying the condition (2) that the "surface area based on the volume is in a range of 0.22 to 1.70 $m^2/cm^3$" has a particle size distribution that enables the material to be used as a negative electrode material for a lithium ion secondary battery. In a case where the surface area based on the volume is less than 0.22 $m^2/cm^3$, the proportion of coarse powder particles having a large particle diameter increases, and thus a uniform negative electrode having a typical thickness (20 to 200 $\mu$m) may not be molded. Further, in a case where the surface area based on the volume is greater than 1.70 $m^2/cm^3$, the proportion of fine powder having a small particle diameter increases, and thus the influence of interaction such as adhesive force acting between particles may be stronger than the influence of the gravity. Therefore, in a case where a negative electrode of a lithium ion secondary battery is formed using a negative electrode mixture containing a synthetic graphite material, a homogeneous negative electrode mixture is unlikely to be obtained, which is not suitable for practical use.

The above-described condition (3) that the "oil absorption is in a range of 67 to 147 mL/100 g" is an index showing the number of particles per unit weight in a case where the surface area based on the volume of the above-described condition (2) is satisfied.

The particle size distribution is expressed as a histogram of the particle diameter ($\mu$m) and the frequency (%), but the frequency does not include any information related to the number of particles per unit weight. Similarly, the surface area based on the volume acquired from the particle size distribution does not include any information related to the number of particles per unit weight.

In a case where the oil absorption of the synthetic graphite material is 147 mL/100 g or less, the lithium ion secondary battery having a negative electrode containing the synthetic graphite material is formed such that lithium metal is unlikely to be deposited on the negative electrode even in a case where charge and discharge cycles are repeated at a low temperature of 0°C or less and the discharge capacity is unlikely to be degraded. Further, in a case where the oil absorption of the synthetic graphite material is 67 mL/100 g or greater, since the number of particles per unit weight is large, charge acceptability can be sufficiently obtained even at a low temperature of 0°C or lower. Therefore, the charge and discharge efficiency of the lithium secondary battery having a negative electrode containing the synthetic graphite material is remarkably improved. Therefore, the lithium ion secondary battery having a negative electrode that contains the synthetic graphite material having an oil absorption of 67 mL/100 g or greater is formed such that the capacity degradation due to repeated charge and discharge cycles at a temperature of 0°C or lower is sufficiently suppressed in practical use.

On the contrary, in the lithium secondary battery having a negative electrode that contains the synthetic graphite material having an oil absorption of greater than 147 mL/100 g, in a case where the battery is charged and discharged at a low temperature of 0°C or lower, the discharge capacity is rapidly degraded for each cycle due to deposition of lithium metal during charging of the battery at the negative electrode. More specifically, in the synthetic graphite material having an oil absorption of greater than 147 mL/100 g, peeling pulverizing occurs during the production preferentially than splitting pulverizing of graphite powder, and the graphite powder is pulverized while the particle shape is sliced, and thus the number of particles per unit weight increases. Therefore, in the negative electrode containing the synthetic graphite material, the void volume (a region where the electrolyte is present) between the adjacent particles of the synthetic graphite material is small, edges serving as entrances for lithium ions in the particles of the synthetic graphite material in which splitting pulverizing of graphite powder occurs are insufficient, and thus the ion conductivity of the electrolytic solution is insufficient. As a result, the cathodic polarization at the negative electrode due to charging of the battery at a low temperature of 0°C or lower is likely to increase, lithium metal is likely to be deposited, and thus the discharge capacity is likely to be degraded due to the repeated charge and discharge cycles.

In the present specification, the splitting pulverizing of graphite powder indicates pulverizing accompanied by breakage of chemical bonds of graphite, which is pulverizing in which cracks occur substantially perpendicular to the plane direction of graphite.

Further, the peeling pulverizing of graphite powder indicates pulverizing without breakage of chemical bonds of graphite, which is pulverizing in which peeling occurs substantially parallel to the plane direction of graphite.

In the lithium ion secondary battery having a negative electrode which contains the synthetic graphite material satisfying the above-described condition (4) that the "nitrogen adsorption specific surface area is in a range of 3.1 to 8.2 $m^2/g$", the discharge capacity is unlikely to be degraded even in a case where charge and discharge cycles are repeated at a low temperature of 0°C or lower. In a case where the nitrogen adsorption specific surface area is 3.1 $m^2/g$ or greater, the effect of suppressing deposition of lithium metal on the negative electrode due to the large nitrogen adsorption specific surface area can be sufficiently obtained. Further, in the synthetic graphite material having a nitrogen adsorption specific surface area of 8.2 $m^2/g$ or less, the area of edges generated by the splitting pulverizing of graphite powder during the production is not extremely large in the specific surface area.

On the contrary, in the synthetic graphite material having a nitrogen adsorption specific surface area of greater than 8.2 $m^2/g$, since the splitting pulverizing occurs preferentially than the peeling pulverizing of the graphite powder during the production, the ratio of the proportion of edges to the proportion of the basal planes of the graphite crystals in the specific surface area is extremely high. As a result, in the lithium ion battery having a negative electrode containing the synthetic graphite material, side reactions and competitive reactions are likely to occur at the negative electrode, and a rapid decrease in charge and discharge efficiency of the negative electrode is unavoidable. Therefore, a difference in charge and discharge efficiency between the negative electrode and the positive electrode is likely to increase, and the discharge capacity is likely to be degraded.

As described below, in the lithium ion secondary battery having a negative electrode that contains the synthetic graphite material satisfying the above-described conditions (1) and (2) and further satisfying any one of the above-described conditions (3) and (4), it cannot be said that degradation of the discharge capacity in a case where the charge and discharge cycles are repeated at a low temperature of 0°C or lower can be sufficiently suppressed.

For example, in the lithium ion battery having a negative electrode that contains the synthetic graphite material having a nitrogen adsorption specific surface area of 3.1 $m^2/g$ or greater and an oil absorption of less than 67 mL/100 g, the charge and discharge efficiency of the negative electrode tends to decrease. Therefore, a difference in charge and discharge efficiency between the negative electrode and the positive electrode tends to increase, and the discharge capacity tends to be degraded. More specifically, since the synthetic graphite material has a specific surface area of 3.1 $m^2/g$ or greater, in the lithium ion battery having a negative electrode that contains the synthetic graphite material, deposition of lithium metal on the negative electrode at a low temperature of 0°C or lower can be suppressed. However, in the synthetic graphite material having an oil absorption of less than 67 mL/100 g, since the splitting pulverizing occurs preferentially than the peeling pulverizing of the graphite powder during the production, the ratio of the proportion of edges to the proportion of the basal planes of the graphite crystals in the specific surface area is extremely high. Therefore, in the lithium ion battery having a negative electrode containing the synthetic graphite material, side reactions and competitive reactions are likely to occur at the negative electrode, and a rapid decrease in charge and discharge efficiency of the negative electrode is unavoidable.

Further, for example, in a lithium ion battery having a negative electrode that contains the synthetic graphite material having an oil absorption of 67 mL/100 g or greater and a nitrogen adsorption specific surface area of greater than 8.2 $m^2/g$, degradation of the discharge capacity in a case where the charge and discharge cycles are repeated at a low temperature of 0°C or lower cannot be sufficiently suppressed due to the following reason.

That is, in the synthetic graphite material having a nitrogen adsorption specific surface area of greater than 8.2 $m^2/g$, as described above, the proportion of the area of edges generated by the splitting pulverizing in the specific surface area is extremely large. Therefore, in the lithium ion battery having a negative electrode containing the synthetic graphite material, the charge and discharge efficiency of the negative electrode tends to decrease rapidly, and the difference in the charge and discharge efficiency between the positive electrode and the negative electrode increases rapidly. As a result, the discharge capacity is degraded significantly even in a case where deposition of lithium metal on the negative electrode of the lithium ion secondary battery does not occur due to repetition of charging and discharging of the battery at a low temperature of 0°C or lower.

[Synthetic graphite material production method]

The synthetic graphite material of the present embodiment can be produced, for example, according to a production method described below.

That is, the production method includes a step of performing a coking treatment on a raw material oil composition by performing a delayed coking process to generate a coking coal composition; a step of pulverizing the coking coal composition to obtain coking coal powder; a step of performing a heat treatment on the coking coal powder to obtain graphite powder; and a step of pulverizing the graphite powder.

(Step of performing coking treatment on raw material oil composition to generate coking coal composition)

Examples of the raw material oil composition used for the synthetic graphite material production method of the present embodiment include bottom oil (FCC DO) of fluid catalytic cracking oil, heavy oil subjected to an advanced hydrodesulfurization treatment, vacuum residual oil (VR), coal- liquefied oil, solvent extracted oil of coal, atmospheric residual oil, shale oil, tar sands bitumen, naphtha tar pitch, coal tar pitch, and heavy oil such as ethylene bottom oil. Further, as the raw material oil composition, any heavy oil described above may be subjected to various treatments such as hydrotreating and then used.

As the raw material oil composition, it is particularly preferable to use heavy oil which contains an appropriate saturated component and appropriate normal paraffin and is subjected to an advanced hydrodesulfurization treatment.

As the raw material oil composition, a single heavy oil may be used, or two or more kinds of heavy oils may be mixed and used. In a case where two or more kinds of heavy oils are mixed and used as the raw material oil composition, the blending ratio between respective heavy oils can be appropriately adjusted according to the properties of the respective heavy oils. Further, the properties of each heavy oil vary depending on the kind of crude oil, the conditions of the treatment carried out until the heavy oil is obtained from the crude oil, and the like.

As the raw material oil composition used for the synthetic graphite material production method of the present embodiment, it is preferable to use a raw material oil composition containing a component that generates a satisfactory bulk mesophase during a coking treatment and a component that generates gas reducing the size of the bulk mesophase in a case where the bulk mesophase is polycondensed, carbonized, and solidified.

Examples of the component that generates a satisfactory bulk mesophase in the raw material oil composition include a heavy oil component in which the aromatic index fa acquired by a Knight method is in a predetermined range. In the synthetic graphite material production method of the present embodiment, it is preferable to use a raw material oil composition in which the aromatic index fa acquired by the Knight method is in a range of 0.3 to 0.65 and more preferable to use a raw material oil composition in which the aromatic index fa acquired by the Knight method is in a range of 0.4 to 0.55.

Here, the aromatic index fa is an aromatic carbon fraction obtained by the Knight method. In the Knight method, the carbon distribution is divided into three components (A1, A2, and A3) as a spectrum of aromatic carbon by the 13C-NMR method. Here, A1 represents the number of carbon atoms in the aromatic ring (the substituted aromatic carbon atoms and half of the non-substituted aromatic carbon atoms (corresponding to the peak in a range of approximately 40 to 60 ppm of 13C-NMR)), A2 represents the number of the other half of the non-substituted remaining aromatic carbon atoms (corresponding to the peak in a range of approximately 60 to 80 ppm of 13C-NMR), and A3 represents the number of aliphatic carbon atoms (corresponding to the peak in a range of approximately 130 to 190 ppm of 13C-NMR). The aromatic index fa is acquired by an expression of "fa = (A1 + A2)/(A1 + A2 + A3)" using A1, A2, and A3. The 13C-NMR method is the most appropriate method for quantitatively acquiring fa, which is the most basic quantity of chemical structural parameters of pitches (see, for example, Non Patent Document 3).

In a case where the aromatic index fa is 0.3 or greater, the yield of coke obtained by performing a coking treatment on the raw material oil composition does not extremely decrease, and a satisfactory bulk mesophase can be obtained. As a result, the crystal structure is easily developed by performing a heat treatment on the coking coal powder pulverized after the coking treatment, which is preferable. Further, in a case where the aromatic index fa is 0.65 or less, the size of the bulk mesophase can be limited to a small size by the gas generated during the coking treatment, which is preferable. On the contrary, in a case where the aromatic index fa is greater than 0.65, a large number of mesophases are rapidly generated in the matrix during the coking treatment, and the rate of coalescence between the mesophases is faster than the single growth rate of the mesophases. As a result, there is a concern that the effect of reducing the size of the bulk mesophase due to the gas generated during the coking treatment cannot be sufficiently obtained, and thus the size of the bulk mesophase may not be limited to a small size.

The normal paraffin is one of the component that generates gas that reduces the size of the bulk mesophase in the raw material oil composition. In the synthetic graphite material production method of the present embodiment, a raw material oil composition having a normal paraffin content of 5% to 20% by mass is preferable, and a raw material oil composition having a normal paraffin content of 10% to 15% by mass is more preferable as the raw material oil composition.

The normal paraffin content of the raw material oil composition in the present embodiment is a value measured by a gas chromatograph equipped with a capillary column. Specifically, the measurement is performed by passing a sample of a non-aromatic component separated by an elution chromatography method through the capillary column after verification with a standard substance of normal paraffin. Based on the measured value, the normal paraffin content with respect to the total mass of the raw material oil composition is calculated.

The normal paraffin contained in the raw material oil composition generates gas during the coking treatment. The gas plays an important role of limiting the size of the bulk mesophase generated during the coking treatment to a small size and limiting the size of the mesophase to a small size. In addition, the gas generated during the coking treatment also has a function of uniaxially aligning adjacent mesophases limited to a small size to form a fine structure having a selective orientation.

It is preferable that the normal paraffin content of the raw material oil composition is 5% by mass or greater from the viewpoint that the bulk mesophase does not grow more than necessary and a large carbon hexagonal network plane laminate is not formed. Further, in a case where the normal paraffin content of the raw material oil composition is 20% by mass or less, the amount of gas generated from the normal paraffin does not extremely increase. In a case where an excessive amount of gas is generated during the coking treatment, the gas tends to work in a direction in which the alignment of the bulk mesophase is disturbed. When the normal paraffin content is 20 mass % or less, the orientation of the bulk mesophase is disturbed by the gas excessively generated in the coking treatment, and even if the raw coal powder pulverized after the coking treatment is carbonized or graphitized, the crystal structure is unlikely to be developed, which is preferable.

As described above, the normal paraffin content of the raw material oil composition is in a range of 5% to 20% by mass, and the aromatic index fa acquired by the Knight method is preferably in a range of 0.3 to 0.65. A coking coal composition having a fine structure with a selective orientation, which is formed of a crystallite in which small hexagonal network planes are laminated, can be obtained by performing the coking treatment on such a raw material oil composition by performing a delayed coking process.

A raw material oil composition in which the normal paraffin content and the aromatic index fa are respectively in the above-described ranges and which has a density D of 0.91 to 1.02 g/cm$^3$ is more preferable, and a raw material oil composition which further has a viscosity V of 10 to 220 mm$^2$/sec is particularly preferable as the raw material oil composition.

As a method of performing "the coking treatment on the raw material oil composition by performing a delayed coking process" in the synthetic graphite material production method of the present embodiment, for example, a known method described in Patent Document 1 can be used.

The method of performing the coking treatment on the raw material oil composition by performing a delayed coking process is markedly suitable for mass production of raw materials for high-quality synthetic graphite materials.

In the present embodiment, a delayed coking process is used as the method of performing the coking treatment on the raw material oil composition. By performing the coking treatment, thermal cracking and the polycondensation reaction of the raw material oil composition occur, and a large liquid crystal that is referred to as a mesophase is generated as an intermediate product, thereby obtaining a coking coal composition.

As the coking treatment, for example, a treatment of thermally cracking the raw material oil composition using a delayed coker to obtain a coking coal composition can be used. It is preferable that the conditions for the delayed coker are set, for example, such that the pressure is in a range of 0.1 to 0.8 MPa and the temperature is in a range of 400°C to 600°C. The pressure in the coking treatment is more preferably in a range of 0.1 to 0.6 MPa.

The temperature in the coking treatment is more preferably in a range of 490°C to 540°C.

In a case where the pressure in the coking treatment is in a range of 0.1 to 0.8 MPa, the release rate of the gas generated from the raw material oil composition to the outside of the system can be limited by a method of controlling the pressure. In the production method of the present embodiment, the size of the carbon hexagonal network plane constituting the mesophase is controlled by the gas generated from the raw material oil composition during the coking treatment. Therefore, the residence time of the gas generated from the raw material oil composition during the coking treatment in the system is an important control parameter for determining the size of the carbon hexagonal network plane. The residence time of the gas generated during the coking treatment in the system can be adjusted by the pressure during the coking treatment.

Further, in a case where the temperature in the coking treatment is in a range of 400°C to 600°C, a satisfactory mesophase can be grown from the raw material oil composition.

On the contrary, in a case where the temperature in the coking treatment is outside a range of 400°C to 600°C and/or the pressure is outside a range of 0.1 to 0.8 MPa, there is a concern that the growth of the crystal structure is insufficient even with the graphite powder obtained by pulverizing the coking coal composition after the coking treatment and performing a heat treatment (graphitization) at 3000°C or higher, and thus the synthetic graphite material satisfying the above-described condition (1) that "the size L (112) is in a range of 4 to 30 nm" is not obtained.

In the synthetic graphite material production method of the present embodiment, the coking coal composition generated by the coking treatment is a composition containing raw coke.

(Step of obtaining coking coal powder)

Next, a step of pulverizing the coking coal composition generated by the coking treatment to obtain coking coal powder is performed. The method of pulverizing the coking coal composition to obtain coking coal powder is not particularly limited, and a known method such as a method using a hammer type mill can be used.

The coking coal powder may be classified so as to have a predetermined particle size. The particle size of the coking coal powder is preferably in a range of 5 to 40 μm in terms of the average particle diameter. The average particle diameter is obtained based on the measurement using a laser diffraction type particle size distribution meter. In a case where the average particle diameter of the pulverized coking coal powder is 40 μm or less, the coking coal powder would have a particle diameter suitable for a negative electrode of a lithium ion secondary battery by being subjected to a heat treatment and being pulverized. It is preferable that the average particle diameter of the coking coal powder is 5 μm or greater from the viewpoint that the specific surface area of the graphite material obtained by performing a heat treatment on the coking coal powder does not extremely increase. In a case where a paste-like negative electrode mixture used for forming a negative electrode of a lithium ion secondary battery using a graphite material having an excessively large specific surface area is prepared, the amount of the solvent to be required is extremely large, which is not preferable.

(Step of performing heat treatment on coking coal powder to obtain graphite powder)

Next, a step of performing a heat treatment on the coking coal powder to obtain graphite powder is performed.

The heat treatment of the coking coal powder in the synthetic graphite material production method of the present embodiment is performed in order to remove volatile components from the coking coal powder, and dehydrate and thermally crack the coking coal powder to cause a solid phase graphitization reaction. By performing the heat treatment, a synthetic graphite material with a stable quality can be obtained.

As the heat treatment of the coking coal powder, a heat treatment of removing volatile components from the coking coal powder or carrying out calcination to obtain calcined coke, performing a carbonization treatment for carbonizing the coking coal powder, and performing a graphitization treatment is an exemplary example. The calcination and the carbonization treatment can be performed as necessary and may not be performed. Even if the calcination and the carbonization step are eliminated in the heat treatment for the coking coal powder, there is almost no impact on the physical properties of the synthetic graphite material to be finally produced.

As the calcination, a method of performing a heat treatment at a highest reach temperature of 500°C to 1500°C and preferably 900°C to 1200°C for a highest reach temperature holding time of 0 to 10 hours in an atmosphere of inert gas such as nitrogen, argon, or helium is an exemplary example.

As the carbonization treatment, a method of performing a heat treatment at a highest reach temperature of 500°C to 1500°C and preferably 900°C to 1500°C for a highest reach temperature holding time of 0 to 10 hours in an atmosphere of inert gas such as nitrogen, argon, or helium is an exemplary example.

As the graphitization treatment, a method of performing a heat treatment at a highest reach temperature of 2500°C to 3200°C and preferably 2800°C to 3200°C for a highest reach temperature holding time of 0 to 100 hours in an atmosphere of inert gas such as nitrogen, argon, or helium is an exemplary example. The graphitization treatment may be performed, for example, by enclosing the coking coal powder in a crucible made of graphite using a graphitization furnace such as an Acheson furnace or an LWG furnace.

In the synthetic graphite material production method of the present embodiment, in a case where a coking coal composition having a fine structure with a selective orientation, which is formed of a crystallite in which small hexagonal network planes are laminated, is used as the coking coal composition, the crystal structure is likely to be developed by performing a heat treatment on the coking coal powder obtained by pulverizing the coking coal composition. As a result, a synthetic graphite material satisfying the above-described condition (1) that "the size L (112) is in a range of 4 to 30 nm" can be easily obtained, which is preferable.

(Step of pulverizing graphite powder)

In the synthetic graphite material production method of the present embodiment, the method of pulverizing graphite powder obtained by performing a heat treatment on the coking coal powder is not particularly limited, and a known method such as a method using an air flow jet mill can be used.

By performing the above-described steps, the synthetic graphite material of the present embodiment is obtained.

In the synthetic graphite material production method of the present embodiment, in the case where a coking coal composition having a fine structure with a selective orientation, which is formed of a crystallite in which small hexagonal network planes are laminated, is used as the coking coal composition, splitting pulverizing is likely to occur in a case where the graphite powder is pulverized obtained by performing a heat treatment on the coking coal powder. The reason for this is because the probability that the graphite powder obtained by using the coking coal composition having the above-described fine structure is broken between adjacent hexagonal network planes having a small size before the heat treatment in a case where mechanical energy for pulverizing is applied to the graphite powder is high.

In a case where the graphite powder obtained by performing a heat treatment on the coking coal powder obtained by pulverizing the coking coal composition satisfies the above-described condition (1) that "the size L (112) is in a range of 4 to 30 nm" and the splitting pulverizing occurs preferentially than the peeling pulverizing, the synthetic graphite material of the present embodiment which has a small oil absorption and a large specific surface area by satisfying the above-described conditions (3) and (4) can be easily obtained by performing the step of pulverizing the graphite powder.

On the contrary, in a case where the graphite powder obtained by performing a heat treatment on the powder of the coking coal composition formed of a crystallite in which large hexagonal network planes are laminated satisfies the above-described condition (1) that "the size L (112) is in a range of 4 to 30 nm", the peeling pulverizing occurs preferentially than the splitting pulverizing in a case where the graphite powder is pulverized.

Therefore, the oil absorption and the specific surface area are rapidly increased by performing the step of pulverizing the graphite powder, and thus the synthetic graphite material of the present embodiment which satisfies the above-described condition (3) cannot be obtained.

In the synthetic graphite material production method of the present embodiment, it is preferable that the synthetic graphite material of the present embodiment which satisfies the above-described conditions (3) and (4) is produced by a method of controlling the following items (a) and (b).

(a) The normal paraffin content and the aromatic index fa (the property of the raw material oil composition) of the raw material oil composition are controlled.
(b) A difference between the surface area based on the volume after the pulverizing of the coking coal composition (hereinafter, also referred to as the "surface area based on the volume of the raw material") and the surface area based on the volume after the pulverizing of the graphite powder which has been subjected to a heat treatment (hereinafter, also referred to as the "surface area based on the volume of the graphite") is controlled.

The surface area based on the volume of the graphite in the item (b) described above is the surface area based on the volume in the condition (2) for the synthetic graphite material of the present embodiment. Therefore, the surface area based on the volume of the graphite in the item (b) described above is in a range of 0.22 to 1.70 $m^2/cm^3$. Further, the surface area based on the volume of the raw material in the item (b) described above is a value larger than the surface area based on the volume of the graphite.

It is preferable that the surface area based on the volume of the raw material in the item (b) described above is appropriately adjusted such that the difference between the surface area based on the volume of the raw material and the surface area based on the volume of the graphite is set to be in a range of 0.05 to 1.45 $m^2/cm^3$ and the synthetic graphite material satisfying the above-described condition (3) that "the oil absorption is in a range of 67 to 147 mL/100 g" and the above-described condition (4) that "the nitrogen adsorption specific surface area is in a range of 3.1 to 8.2 $m^2/g$" can be obtained. The difference between the surface area based on the volume of the raw material and the surface area based on the volume of the graphite can be controlled by controlling the pulverizing conditions (such as operating conditions of a pulverizer) in a case of pulverizing the coking coal composition and pulverizing the graphite powder which has been subjected to the heat treatment.

The specific surface area increases monotonically as the oil absorption increases. Further, the function of the oil absorption with respect to the specific surface area strongly depends on the normal paraffin content and the aromatic index fa of the raw material oil composition. Therefore, the oil absorption and the nitrogen adsorption specific surface area of the synthetic graphite material can be controlled to satisfy the above-described conditions (3) and (4) within the range of the surface area based on the volume of the condition (2) by changing the items (a) and (b) described above.

By employing the lithium ion secondary battery having a negative electrode containing the synthetic graphite material of the present embodiment, the discharge capacity is unlikely to be degraded even in a case where charging and discharging of the battery are repeated at a low temperature of 0°C or lower. Therefore, the lithium ion secondary battery having a negative electrode containing the synthetic graphite material of the present embodiment is suitable for industrial purposes such as applications for automobiles such as hybrid automobiles, plug-in hybrid automobiles, and electric automobiles and power storage of system infrastructures.

[Negative electrode for lithium ion secondary battery]

Next, a negative electrode for the lithium ion secondary battery of the present embodiment will be described.

The negative electrode for the lithium ion secondary battery of the present embodiment contains the graphite material containing the synthetic graphite material of the present embodiment, a binder (binding agent), and a conductive assistant contained as necessary.

The negative electrode for the lithium ion secondary battery of the present embodiment is not limited as long as the negative electrode contains the synthetic graphite material of the present embodiment, and the negative electrode may further contain, as the graphite material, one or two or more kinds of known graphite materials as necessary in addition to the synthetic graphite material of the present embodiment.

Examples of known graphite materials include synthetic graphite materials other than the synthetic graphite material of the present embodiment and natural graphite-based materials.

Examples of the natural graphite-based materials include naturally produced graphite-like materials, materials obtained by highly purifying the graphite-like materials, highly purified and then spherically formed (including a mechanochemical treatment) materials, and materials obtained by coating surfaces of high-purity products and spherical products with other carbons (for example, pitch-coated products and CVD-coated products), and materials which have been subjected to a plasma treatment.

The shapes of the synthetic graphite materials other than the synthetic graphite material of the present embodiment, and the natural graphite-based materials are not particularly limited, and may be, for example, scaly or spherical.

In a case where the negative electrode contains a graphite material (another graphite material) other than the synthetic graphite material of the present embodiment, the mixing ratio between the synthetic graphite material of the present embodiment and the other graphite material can be set to be optional. In the case where the negative electrode contains a graphite material (another graphite material) other than the synthetic graphite material of the present embodiment, the content of the synthetic graphite material of the present embodiment is preferably 20% by mass or greater, preferably 30% by mass or greater, and still more preferably 50% by mass or greater.

As the binder (binding agent), a known agent used for a negative electrode for a lithium ion secondary battery can be used, and for example, carboxymethyl cellulose (CMC), polyvinylidene fluoride, polytetrafluoroethylene, and styrene-butadiene rubber (SBR) can be used alone or in the form of a mixture of two or more kinds thereof.

The content of the binder in the negative electrode mixture is preferably approximately 1 to 30 parts by mass with respect to 100 parts by mass of the graphite material, and may be appropriately set as necessary in consideration of the design of the lithium ion secondary battery.

As the conductive assistant, a known agent used for a negative electrode for a lithium ion secondary battery can be used, and for example, conductive polymers such as carbon black, graphite, acetylene black, an indium-tin oxide exhibiting conductivity, polyaniline, polythiophene, and polyphenylene vinylene can be used alone or in the form of a mixture of two or more kinds thereof.

The amount of the conductive assistant to be used is preferably in a range of 1 to 15 parts by mass with respect to 100 parts by mass of the graphite material, and may be appropriately set as necessary in consideration of the design of the lithium ion secondary battery.

The method of producing the negative electrode for the lithium ion secondary battery of the present embodiment is not particularly limited, and a known production method can be used.

For example, a negative electrode mixture which is a mixture containing the graphite material that contains the synthetic graphite material of the present embodiment, a binder (binding agent), a conductive assistant contained as necessary, and a solvent is produced. Thereafter, a method of pressure-molding the negative electrode mixture to predetermined dimensions is performed.

As the solvent used in the negative electrode mixture, a known solvent used for the negative electrode for a lithium ion secondary battery can be used. Specifically, for example, an organic solvent such as dimethylformamide, N-methylpyrrolidone, isopropanol, or toluene, and a solvent such as water can be used alone or in the form of a mixture of two or more kinds thereof.

In the production of the negative electrode mixture, as a method of mixing the graphite material, the binder, the conductive assistant contained as necessary, and the organic solvent, for example, a known device such as a screw type kneader, a ribbon mixer, a universal mixer, or a planetary mixer can be used.

The pressure molding of the negative electrode mixture can be performed by using a method such as roll pressure or press pressure. It is preferable that the pressure molding of the negative electrode mixture is performed at a pressure of approximately 100 to 300 MPa.

The negative electrode for a lithium ion secondary battery of the present embodiment may be produced by, for example, a method described below. That is, the graphite material containing the synthetic graphite material of the present embodiment, the binder (binding agent), the conductive assistant contained as necessary, and the solvent are kneaded by a known method to produce a slurry-like (paste-like) negative electrode mixture. Thereafter, a negative electrode current collector such as copper foil is coated with the slurry-like negative electrode mixture and dried to mold into a sheet-like or pellet-like shape. Thereafter, the layer formed of the dried negative electrode mixture is rolled and cut to have predetermined dimensions.

The method of coating the negative electrode current collector with the slurry-like negative electrode mixture is not particularly limited, and for example, a known method such as a metal mask printing method, an electrostatic coating method, a dip coating method, a spray coating method, a roll coating method, a doctor blade method, a gravure coating method, a screen printing method, or a die coater method can be used.

It is preferable that the negative electrode mixture applied onto the negative electrode current collector is rolled using, for example, a flat press, a calendar roll, or the like.

The layer formed of the dried negative electrode mixture formed on the negative electrode current collector can be integrated with the negative electrode current collector according to a known method such as a method using a roll, a press, or a combination thereof.

The material of the negative electrode current collector can be used without any limitation if the material does not form an alloy with lithium. Specific examples of the material of the negative electrode current collector include copper, nickel, titanium, and stainless steel.

The shape of the negative electrode current collector can also be used without any limitation. Specific examples of the shape of the negative electrode current collector include a foil shape, a perforated foil shape, a mesh shape, and a strip shape as the overall shape thereof.

Further, as the negative electrode current collector, for example, a porous material such as a porous metal (foam metal) or carbon paper may be used.

[Lithium ion secondary battery]

Next, the lithium ion secondary battery of the present embodiment will be described.

Fig. 1 is a schematic cross-sectional view showing an example of the lithium ion secondary battery of the present embodiment. A lithium ion secondary battery 10 shown in Fig. 1 includes a negative electrode 11 integrated with a negative electrode current collector 12 and a positive electrode 13 integrated with a positive electrode current collector 14. In the lithium ion secondary battery 10 shown in Fig. 1, the negative electrode of the present embodiment is used as the negative electrode 11. The negative electrode 11 and a positive electrode 13 are disposed to face each other with a separator 15 interposed therebetween. In Fig. 1, the reference numeral 16 represents an aluminum laminate exterior. An electrolytic solution is injected into the aluminum laminate exterior 16.

The positive electrode 10 contains an active material, a binder (binding agent), and a conductive assistant contained as necessary.

As the active material, a known material used for a positive electrode for a lithium ion secondary battery can be used, and a metal compound, a metal oxide, a metal sulfide, or a conductive polymer material which is capable of doping or intercalating lithium ions can be used. Specific examples of the active material include lithium cobaltate ($LiCoO_2$), lithium nickelate ($LiNiO_2$), lithium manganate ($LiMn_2O_4$), a complex oxide ($LiCo_XNi_YMn_ZO_2$, X + Y + Z = 1), a lithium vanadium compound, $V_2O_5$, $V_6O_{13}$, $VO_2$, $MnO_2$, $TiO_2$, $MoV_2O_8$, $TiS_2$, $V_2S_5$, $VS_2$, $MoS_2$, $MoS_3$, $Cr_3O_8$, $Cr_2O_5$, olivine type $LiMPO_4$ (M:Co, Ni, Mn, Fe), a conductive polymer such as polyacetylene, polyaniline, polypyrrole, polythiophene, or polyacene, porous carbon, and mixtures thereof.

As the binder, the same binder as that used for the negative electrode 11 described above can be used.

As the conductive assistant, the same conductive assistant as that used for the negative electrode 11 described above can be used.

As the positive electrode current collector 14, the same negative electrode current collector as described above can be used.

As the separator 15, for example, non-woven fabric, a cloth, a microporous film, which contains polyolefin such as polyethylene or polypropylene as a main component, or a combination thereof can be used.

Further, in a case where the lithium ion secondary battery has a structure in which the positive electrode and the negative electrode do not come into direct contact with each other, the separator is unnecessary.

As the electrolytic solution and an electrolyte used in the lithium ion secondary battery 10, a known organic electrolytic solution, an inorganic solid electrolyte, and a polymer solid electrolyte which are used in a lithium ion secondary battery can be used.

As the electrolytic solution, it is preferable to use an organic electrolytic solution from the viewpoint of the electrical conductivity.

Examples of the organic electrolytic solution include an ether such as dibutyl ether, ethylene glycol monomethyl ether, ethylene glycol monoethyl ether, ethylene glycol monobutyl ether, diethylene glycol monomethyl ether, or ethylene glycol phenyl ether, an amide such as N-methylformamide, N,N-dimethylformamide, N-ethylformamide, N,N-diethylformamide, N-methylacetamide, N,N-dimethylacetamide, N-ethylacetamide, or N,N-diethylacetamide, a sulfur-containing compound such as dimethyl sulfoxide or sulfolane, dialkyl ketone such as methyl ethyl ketone or methyl isobutyl ketone, a cyclic ether such as tetrahydrofuran or 2-methoxy tetrahydrofuran, a cyclic carbonate such as ethylene carbonate, butylene carbonate, propylene carbonate, or vinylene carbonate, a chain-like carbonate such as diethyl carbonate, dimethyl carbonate, methyl ethyl carbonate, or methyl propyl carbonate, cyclic carbonic acid ester such as $\gamma$-butyrolactone or $\gamma$-valerolactone, chain-like carbonic acid ester such as methyl acetate, ethyl acetate, methyl propionate, or ethyl propionate, and an organic solvent such as N-methyl-2-pyrrolidinone, acetonitrile, or nitromethane. These organic electrolytic solutions can be used alone or in the form of a mixture of two or more kinds thereof.

As the electrolyte, various known lithium salts can be used.

Examples of the lithium salts include $LiClO_4$, $LiBF_4$, $LiPF_6$, $LiAlCl_4$, $LiSbF_6$, $LiSCN$, $LiCl$, $LiCF_3SO_3$, $LiCF_3CO_2$, $LiN(CF_3SO_2)_2$, and $LiN(C_2F_5SO_2)_2$.

Examples of the polymer solid electrolyte include a polyethylene oxide derivative and a polymer containing the derivative, a polypropylene oxide derivative and a polymer containing the derivative, a phosphoric acid ester polymer, and a polycarbonate derivative and a polymer containing the derivative.

Since the lithium ion secondary battery 10 of the present embodiment includes the negative electrode 11 containing the synthetic graphite material of the present embodiment, capacity degradation is unlikely to occur even in a case where the charge and discharge cycles are repeated at a low temperature of 0°C or lower. Therefore, the lithium ion secondary battery 10 of the present embodiment can be preferably used for industrial purposes such as applications for automobiles such as hybrid automobiles, plug-in hybrid automobiles, and electric automobiles and power storage of system infrastructures.

Further, the lithium ion secondary battery of the present embodiment is not limited as long as the battery is used the negative electrode of the present embodiment, and is not restricted in selecting members necessary for the configuration of the battery other than the negative electrode.

Specifically, the structure of the lithium ion secondary battery of the present embodiment is not limited to the lithium ion secondary battery 10 shown in Fig. 1.

The lithium ion secondary battery may have, for example, a structure obtained by inserting a wound electrode group in which a positive electrode and a negative electrode, which are molded into a strip shape, are spirally wound through a separator, into a battery case and sealing the case. Further, the lithium ion secondary battery may be a structure obtained by enclosing a laminated electrode plate group in which a positive electrode and a negative electrode, which are molded into a flat plate shape, are sequentially laminated through a separator, in an exterior body.

The lithium ion secondary battery of the present embodiment can be used as, for example, a paper cell, a button cell, a coin cell, a laminated cell, a cylindrical cell, or a square cell, etc.

[Examples]

Hereinafter, the present invention will be described in more detail with reference to examples and comparative examples. Further, the present invention is not limited to the following examples.

<Production of synthetic graphite material>

(Example 1)

Atmospheric residual oil having a sulfur content of 3.1% by mass was hydrodesulfurized in the presence of a catalyst such that the hydrocracking rate reached 25% or less, thereby obtaining hydrodesulfurized oil (A). The hydrodesulfurization was performed under the condition of a total pressure of 18 MPa, a hydrogen partial pressure of 16 MPa, and a temperature of 380°C.

Further, the atmospheric residual oil which had been subjected to vacuum distillation and further hydrodesulfurized (sulfur content of 380 mass ppm, density of 0.83 $g/cm^3$ at 15°C) was subjected to fluid catalytic cracking under the conditions of a reaction temperature of 530°C, a total pressure of 0.23 MPa, and a catalyst/oil ratio of 13, and a contact time of 7 seconds, thereby obtaining a fluid catalytic cracking residual oil (A). As the catalyst, a silica-alumina catalyst which having platinum supported thereon was used.

Further, the atmospheric residual oil (density of 0.92 $g/cm^3$, sulfur content of 0.35% by mass) was subjected to vacuum distillation under the conditions of a heating furnace outlet temperature of 350°C and a pressure of 1.3 kPa, thereby obtaining vacuum residual oil (B) having an initial boiling point of 410°C, an asphalt content of 9% by mass, a saturated content of 61% by mass, a sulfur content of 0.1% by mass, and a nitrogen content of 0.3% by mass. The same volume of n-heptane as described above was added to and mixed with the vacuum residual oil (B), and selective extraction was carried out with dimethylformamide so that the aromatic content and the saturated content were separated out from the oil.

The "sulfur content" indicates a value measured in conformity with JIS K2541. Further, the "nitrogen content" indicates a value measured in conformity with JIS K 2609. Further, the "saturated content" and the "asphalt content" indicate values measured using a thin layer chromatograph.

The hydrodesulfurized oil (A), the fluid catalytic cracking residual oil (A), and the saturated content of the vacuum residual oil (B) which were obtained in the above-described manners were mixed at a mass ratio of 10:65:25, thereby obtaining a raw material oil composition of Example 1.

The normal paraffin content and the aromatic index fa of the obtained raw material oil composition of Example 1 were acquired by the methods described below. The results thereof are listed in Table 1.

(Normal paraffin content)

The normal paraffin content in the raw material oil composition was measured by a gas chromatograph equipped with a capillary column. Specifically, the measurement was performed by passing a sample of a non-aromatic component separated by an elution chromatography method through the capillary column after verification with a standard substance of normal paraffin. Based on the measured value, the normal paraffin content (% by mass) with respect to the total mass of the raw material oil composition was calculated.

(Aromatic index fa)

The aromatic index fa of the raw material oil composition was acquired by the Knight method. Specifically, the carbon distribution was divided into three components (A1, A2, and A3) as a spectrum of aromatic carbon by the 13C-NMR method. Here, A1 represents the number of carbon atoms inside the aromatic ring (the substituted aromatic carbon atoms and half of the non-substituted aromatic carbon atoms (corresponding to the peak in a range of approximately 40 to 60 ppm of 13C-NMR)), A2 represents the number of the other half of the non-substituted remaining aromatic carbon atoms (corresponding to the peak in a range of approximately 60 to 80 ppm of 13C-NMR), and A3 represents the number of aliphatic carbon atoms (corresponding to the peak in a range of approximately 130 to 190 ppm of 13C-NMR). The aromatic index fa was acquired by an expression of "fa = (A1 + A2)/(A1 + A2 + A3)" using A1, A2, and A3.

Next, the raw material oil composition of Example 1 was put into a test tube and was subjected to a heat treatment at 500°C for 3 hours under normal pressure as a coking treatment for coking, thereby obtaining a coking coal composition.

The obtained coking coal composition was pulverized with a hammer type mill such that the average particle diameter measured by a laser diffraction type particle size distribution measuring device reached 24.5 μm, thereby obtaining coking coal powder.

The surface area based on the volume of the coking coal powder (the surface area based on the volume of the raw material) was acquired according to the same method as that for the surface area based on the volume of the synthetic graphite material described below. The results thereof are listed in Table 1.

The obtained coking coal powder was heated (calcined) at 1000°C in a nitrogen gas stream to obtain calcined coke. A treatment of increasing the temperature from room temperature to 1000°C for a heating time of 4 hours, holding the temperature at 1000°C for a holding time of 4 hours, lowering the temperature from 1000°C to 400°C for a cooling time of 2 hours, and natural cooling for 4 hours while maintaining the nitrogen gas stream after the temperature reached 400°C was performed for the calcination.

The obtained calcined coke was put into a crucible made of graphite and graphitized at 2800°C under a nitrogen gas stream using a high-frequency induction furnace. As the graphitization treatment, a treatment of increasing the temperature from room temperature to 2800°C for a heating time of 23 hours, holding the temperature at 2800°C for a holding time of 3 hours, and natural cooling for 6 days, and taking out the resultant was performed.

The obtained graphite powder was pulverized with an air flow jet mill such that the average particle diameter thereof measured by a laser diffraction type particle size distribution measuring device reached 5.2 μm, thereby obtaining a synthetic graphite material of Example 1.

The size L (112) of the crystallite, the surface area based on the volume, the oil absorption, and the nitrogen adsorption specific surface area of the obtained synthetic graphite material of Example 1 were acquired by the methods described below. Further, a difference between the surface area based on the volume of the raw material and the surface area based on the volume of the graphite was calculated from the measurement results of the surface area based on the volume of the raw material and the surface area based on the volume of the synthetic graphite material (the surface area based on the graphite). The results are listed in Table 1.

(Calculation of size L (112) of crystallite)

The synthetic graphite material was mixed with 10% by mass of a Si standard sample as an internal standard, a glass sample holder (window frame size of 16 mm × 20 mm, depth of 0.2 mm) was packed with the mixture, and the measurement was performed according to a wide angle X-ray diffraction method in conformity with JIS R7651 (2007), and the size L (112) of the crystallite was calculated.
ULTIMA IV (manufactured by Rigaku Corporation) was used as the X-ray diffractometer, and CuKα rays (using Kβ filter Ni) were used as the X-ray source. Further, the voltage applied to the X-ray tube and the current thereof were set to 40 kV and 40 mA.
The obtained diffraction pattern was analyzed according to a method in conformity with JIS R7651 (2007). Specifically, the measurement data was subjected to a smoothing treatment, and then to absorption correction, polarization correction, and Lorentz correction after background removal. Thereafter, the (112) diffraction line of the synthetic graphite material was corrected using the peak position and the half width of a diffraction line (422) of the Si standard sample, and the size L (112) of the crystallite was calculated. Further, the size of the crystallite was calculated based on the half width of the corrected peak using the following Scherrer equation. The measurement and the analysis were carried out three times each, and the average value was defined as the size L (112).

$$L = K \times \lambda/(\beta \times \cos\theta B) \text{ ------- Scherrer equation}$$

Here, L represents the crystal size (nm).

K represents the shape factor constant (= 1.0).
λ represents the wavelength of X-rays (= 0.15406 nm).
θ represents the Bragg angle (corrected diffraction angle).
β represents the true half width (correction value).

(Measurement of surface area based on volume)

The particle size distribution of the synthetic graphite material was measured using a laser diffraction/scattering type particle diameter distribution measuring device (MT3300EXII) (manufactured by Microtrac Bell Co., Ltd). The dispersion liquid used for the measurement was prepared by adding a 0.1 mass% sodium hexametaphosphate aqueous solution (several drops) and a surfactant (several drops) to approximately 0.5 g of the synthetic graphite material, sufficiently stirring the solution using a mortar so as to be homogeneous, further adding 40 mL of a 0.1 mass% sodium hexametaphosphate aqueous solution thereto, and dispersing the solution using an ultrasonic homogenizer. The surface area was calculated based on the obtained measurement results of the particle size distribution in conformity with "5.5 Calculation of surface area based on volume" in "Representation of results of particle size analysis- Part 2: Calculation of average particle sizes/diameters of moments from particle size distributions" of JIS Z 8819-2 (2001).

(Measurement of oil absorption)

The oil absorption was measured and calculated in conformity with "Oil absorption- Section 1: Refined linseed oil method" of JIS K 5101-13-1 (2004). Specifically, the finely weighed synthetic graphite material was placed on a measuring plate, refined linseed oil was added dropwise thereonto from a burette having a volume of 10 mL, the refined linseed oil was kneaded with a palette knife so as to be completely kneaded, and the dropwise addition and the kneading were repeatedly performed. Next, the point where the paste had a smooth hardness was set as the end point, and the oil absorption was finally calculated based on the following equation.

$$O1 = 100 \times V/m$$

Here, O1 represents the oil absorption (mL00g).

V represents the volume (mL) of the refined linseed oil which had been added dropwise.
m represents the mass (g) of the synthetic graphite material placed on the measuring plate.

(Measurement of nitrogen adsorption specific surface area)

The nitrogen adsorption specific surface area was measured and calculated in conformity with "Determination of the Specific Surface Area of Powders (Solids) by Gas Adsorption-BET Method" of JIS Z 8830 (2013) using a specific surface area measuring device (BELSORP minill) (manufactured by Microtrac Bell Co., Ltd.). Further, the synthetic graphite material was pre-dried at 300°C for 3 hours under reduced pressure. Thereafter, the specific surface area was calculated by the nitrogen adsorption BET multipoint method according to the gas flow method.

(Example 2)

The same volume of n-heptane was added to and mixed with the fluid catalytic cracking residual oil (A) obtained and described above in Example 1, subsequently selective extraction was carried out with dimethylformamide so that the aromatic content and the saturated content were separated out from the oil. The saturated content here was used as the raw material oil composition of Example 2. The normal paraffin content and the aromatic index fa of the raw material oil composition of Example 2 were respectively acquired according to the same methods as those in Example 1. The results thereof are listed in Table 1.

The raw material oil composition of Example 2 was subjected to a coking treatment for coking in the same manner as in Example 1, thereby obtaining a coking coal composition.

The obtained coking coal composition was pulverized with a hammer type mill such that the average particle diameter measured by a laser diffraction type particle size distribution measuring device reached 30.2 μm, thereby obtaining coking coal powder.

The surface area based on the volume of the coking coal powder (the surface area based on the volume of the raw material) was acquired in the same manner as in Example 1. The results thereof are listed in Table 1.

The obtained coking coal powder was calcined in the same manner as in Example 1 to obtain calcined coke.

The obtained calcined coke was put into a crucible made of graphite and graphitized at 2700°C under a nitrogen gas stream using a high-frequency induction furnace. As the graphitization treatment, a treatment of increasing the temperature from room temperature to 2700°C for a heating time of 23 hours, holding the temperature at 2700°C for a holding time of 3 hours, and natural cooling for 6 days, and taking out the resultant was performed.

The obtained graphite powder was pulverized with an air flow jet mill such that the average particle diameter thereof measured by a laser diffraction type particle size distribution measuring device reached 23.4 μm, thereby obtaining a synthetic graphite material of Example 2.

The size L (112) of the crystallite, the surface area based on the volume, the oil absorption, the nitrogen adsorption specific surface area, and the difference between the surface area based on the volume of the raw material and the surface area based on the volume of the graphite of the obtained synthetic graphite material of Example 2 were acquired according to the same methods as in Example 1. The results thereof are listed in Table 1.

(Example 3)

The hydrodesulfurized oil (A) obtained in Example 1 and the aromatic content of the fluid catalytic cracking residual oil (A) obtained in Example 2 were mixed at a mass ratio of 45:55 to be used as a raw material oil composition of Example 3.

The normal paraffin content and the aromatic index fa of the raw material oil composition of Example 3 were respectively acquired according to the same methods as those in Example 1. The results thereof are listed in Table 1.

The raw material oil composition of Example 3 was subjected to a coking treatment for coking in the same manner as in Example 1, thereby obtaining a coking coal composition.

The obtained coking coal composition was pulverized with a hammer type mill such that the average particle diameter measured by a laser diffraction type particle size distribution measuring device reached 21.4 μm, thereby obtaining coking coal powder.

The surface area based on the volume of the coking coal powder (the surface area based on the volume of the raw material) was acquired in the same manner as in Example 1. The results thereof are listed in Table 1.

The obtained coking coal powder was calcined in the same manner as in Example 1 to obtain calcined coke.

The obtained calcined coke was put into a crucible made of graphite and graphitized at 2900°C under a nitrogen gas stream using a high-frequency induction furnace. As the graphitization treatment, a treatment of increasing the temperature from room temperature to 2800°C for a heating time of 23 hours, holding the temperature at 2800°C for a holding time of 3 hours, and natural cooling for 6 days, and taking out the resultant was performed.

The obtained graphite powder was pulverized with an air flow jet mill such that the average particle diameter thereof measured by a laser diffraction type particle size distribution measuring device reached 11.8 μm, thereby obtaining a synthetic graphite material of Example 3.

The size L (112) of the crystallite, the surface area based on the volume, the oil absorption, the nitrogen adsorption specific surface area, and the difference between the surface area based on the volume of the raw material and the surface area based on the volume of the graphite of the obtained synthetic graphite material of Example 3 were acquired according to the same methods as in Example 1. The results thereof are listed in Table 1.

(Example 4)

The aromatic content of the fluid catalytic cracking residual oil (A) obtained in Example 2 and the saturated content of the vacuum residual oil (B) obtained in Example 1 were mixed at a mass ratio of 70:30 to be used as a raw material oil composition of Example 4. The normal paraffin content and the aromatic index fa of the raw material oil composition of Example 4 were respectively acquired according to the same methods as those in Example 1. The results thereof are listed in Table 1.

The raw material oil composition of Example 4 was subjected to a coking treatment for coking in the same manner as in Example 1, thereby obtaining a coking coal composition.

The obtained coking coal composition was pulverized with a hammer type mill such that the average particle diameter measured by a laser diffraction type particle size distribution measuring device reached 38.7 $\mu$m, thereby obtaining coking coal powder.

The surface area based on the volume of the coking coal powder (the surface area based on the volume of the raw material) was acquired in the same manner as in Example 1. The results thereof are listed in Table 1.

The obtained coking coal powder was put into a crucible made of graphite, embedded in an Acheson furnace with coke breeze, and graphitized at 2950°C. As the graphitization treatment, a treatment of increasing the temperature from room temperature to 2950°C for a heating time of 130 hours, holding the temperature at 2950°C for a holding time of 8 hours, and natural cooling for 25 days, and taking out the resultant was performed.

The obtained graphite powder was pulverized with an air flow jet mill such that the average particle diameter thereof measured by a laser diffraction type particle size distribution measuring device reached 9.8 $\mu$m, thereby obtaining a synthetic graphite material of Example 4.

The size L (112) of the crystallite, the surface area based on the volume, the oil absorption, the nitrogen adsorption specific surface area, and the difference between the surface area based on the volume of the raw material and the surface area based on the volume of the graphite of the obtained synthetic graphite material of Example 4 were acquired according to the same methods as in Example 1. The results thereof are listed in Table 1.

(Example 5)

The hydrodesulfurized oil (A) and the fluid catalytic cracking residual oil (A) which were obtained in Example 1 were mixed at a mass ratio of 25:75 so as to be used as a raw material oil composition of Example 5. The normal paraffin content and the aromatic index fa of the raw material oil composition of Example 5 were respectively acquired according to the same methods as those in Example 1. The results thereof are listed in Table 1.

The raw material oil composition of Example 5 was subjected to a coking treatment for coking in the same manner as in Example 1, thereby obtaining a coking coal composition.

The obtained coking coal composition was pulverized with a hammer type mill such that the average particle diameter measured by a laser diffraction type particle size distribution measuring device reached 42.6 $\mu$m, thereby obtaining coking coal powder.

The surface area based on the volume of the coking coal powder (the surface area based on the volume of the raw material) was acquired in the same manner as in Example 1. The results thereof are listed in Table 1.

The obtained coking coal powder was put into a crucible made of graphite, embedded in an Acheson furnace with coke breeze, and graphitized at 3150°C. As the graphitization treatment, a treatment of increasing the temperature from room temperature to 3150°C for a heating time of 130 hours, holding the temperature at 3150°C for a holding time of 19 hours, and natural cooling for 25 days, and taking out the resultant was performed.

The obtained graphite powder was pulverized with an air flow jet mill such that the average particle diameter thereof measured by a laser diffraction type particle size distribution measuring device reached 31.2 $\mu$m, thereby obtaining a synthetic graphite material of Example 5.

The size L (112) of the crystallite, the surface area based on the volume, the oil absorption, the nitrogen adsorption specific surface area, and the difference between the surface area based on the volume of the raw material and the surface area based on the volume of the graphite of the obtained synthetic graphite material of Example 5 were acquired according to the same methods as in Example 1. The results thereof are listed in Table 1.

(Comparative Example 1)

The aromatic content of the fluid catalytic cracking residual oil (A) obtained in Example 2 and the saturated content of the vacuum residual oil (B) obtained in Example 1 were mixed at a mass ratio of 40:60 to be used as a raw material oil composition of Comparative Example 1. The normal paraffin content and the aromatic index fa of the raw material oil composition of Comparative Example 1 were respectively acquired according to the same methods as those in Example 1. The results thereof are listed in Table 1.

The raw material oil composition of Comparative Example 1 was subjected to a coking treatment for coking in the same manner as in Example 1, thereby obtaining a coking coal composition.

The obtained coking coal composition was pulverized with a hammer type mill such that the average particle diameter measured by a laser diffraction type particle size distribution measuring device reached 22.3 μm, thereby obtaining coking coal powder.

The surface area based on the volume of the coking coal powder (the surface area based on the volume of the raw material) was acquired in the same manner as in Example 1. The results thereof are listed in Table 1.

The obtained coking coal powder was calcined in the same manner as in Example 1 to obtain calcined coke.

The obtained calcined coke was put into a crucible made of graphite and graphitized at 2700°C under a nitrogen gas stream using a high-frequency induction furnace. As the graphitization treatment, a treatment of increasing the temperature from room temperature to 2700°C for a heating time of 23 hours, holding the temperature at 2700°C for a holding time of 3 hours, and natural cooling for 6 days, and taking out the resultant was performed.

The obtained graphite powder was pulverized with an air flow jet mill such that the average particle diameter thereof measured by a laser diffraction type particle size distribution measuring device reached 5.6 μm, thereby obtaining a synthetic graphite material of Comparative Example 1.

The size L (112) of the crystallite, the surface area based on the volume, the oil absorption, the nitrogen adsorption specific surface area, and the difference between the surface area based on the volume of the raw material and the surface area based on the volume of the graphite of the obtained synthetic graphite material of Comparative Example 1 were acquired according to the same methods as in Example 1. The results thereof are listed in Table 1.

(Comparative Example 2)

The hydrodesulfurized oil (A) obtained in Example 1 and the saturated content of the fluid catalytic cracking residual oil (A) obtained in Example 2 were mixed at a mass ratio of 30:70 so as to be used as a raw material oil composition of Comparative Example 2. The normal paraffin content and the aromatic index fa of the raw material oil composition of Comparative Example 2 were respectively acquired according to the same methods as those in Example 1. The results thereof are listed in Table 1.

The raw material oil composition of Comparative Example 2 was subjected to a coking treatment for coking in the same manner as in Example 1, thereby obtaining a coking coal composition.

The obtained coking coal composition was pulverized with a hammer type mill such that the average particle diameter measured by a laser diffraction type particle size distribution measuring device reached 20.3 μm, thereby obtaining coking coal powder.

The surface area based on the volume of the coking coal powder (the surface area based on the volume of the raw material) was acquired in the same manner as in Example 1. The results thereof are listed in Table 1.

The obtained coking coal powder was calcined in the same manner as in Example 1 to obtain calcined coke.

The obtained calcined coke was put into a crucible made of graphite and graphitized at 2800°C under a nitrogen gas stream using a high-frequency induction furnace. As the graphitization treatment, a treatment of increasing the temperature from room temperature to 2800°C for a heating time of 23 hours, holding the temperature at 2800°C for a holding time of 3 hours, and natural cooling for 6 days, and taking out the resultant was performed.

The obtained graphite powder was pulverized with an air flow jet mill such that the average particle diameter thereof measured by a laser diffraction type particle size distribution measuring device reached 15.8 μm, thereby obtaining a synthetic graphite material of Comparative Example 2.

The size L (112) of the crystallite, the surface area based on the volume, the oil absorption, the nitrogen adsorption specific surface area, and the difference between the surface area based on the volume of the raw material and the surface area based on the volume of the graphite of the obtained synthetic graphite material of Comparative Example 2 were acquired according to the same methods as in Example 1. The results thereof are listed in Table 1.

(Comparative Example 3)

The aromatic content and the saturated content of the fluid catalytic cracking residual oil (A) obtained in Example 2 were mixed at a mass ratio of 50:50 so as to be used as a raw material oil composition of Comparative Example 3.

The normal paraffin content and the aromatic index fa of the raw material oil composition of Comparative Example 3 were respectively acquired according to the same methods as those in Example 1. The results thereof are listed in Table 1.

The raw material oil composition of Comparative Example 3 was subjected to a coking treatment for coking in the same manner as in Example 1, thereby obtaining a coking coal composition.

The obtained coking coal composition was pulverized with a hammer type mill such that the average particle diameter measured by a laser diffraction type particle size distribution measuring device reached 31.5 $\mu$m, thereby obtaining coking coal powder.

The surface area based on the volume of the coking coal powder (the surface area based on the volume of the raw material) was acquired in the same manner as in Example 1. The results thereof are listed in Table 1.

The obtained coking coal powder was calcined in the same manner as in Example 1 to obtain calcined coke.

The obtained calcined coke was put into a crucible made of graphite and graphitized at 2900°C under a nitrogen gas stream using a high-frequency induction furnace. As the graphitization treatment, a treatment of increasing the temperature from room temperature to 2900°C for a heating time of 23 hours, holding the temperature at 2900°C for a holding time of 3 hours, and natural cooling for 6 days, and taking out the resultant was performed.

The obtained graphite powder was pulverized with an air flow jet mill such that the average particle diameter thereof measured by a laser diffraction type particle size distribution measuring device reached 24.8 $\mu$m, thereby obtaining a synthetic graphite material of Comparative Example 3.

The size L (112) of the crystallite, the surface area based on the volume, the oil absorption, the nitrogen adsorption specific surface area, and the difference between the surface area based on the volume of the raw material and the surface area based on the volume of the graphite of the obtained synthetic graphite material of Comparative Example 3 were acquired according to the same methods as in Example 1. The results thereof are listed in Table 1.

(Comparative Example 4)

The hydrodesulfurized oil (A) obtained in Example 1 and the aromatic content of the fluid catalytic cracking residual oil (A) obtained in Example 2 were mixed at a mass ratio of 7:93 so as to be used as a raw material oil composition of Comparative Example 4. The normal paraffin content and the aromatic index fa of the raw material oil composition of Comparative Example 4 were respectively acquired according to the same methods as those in Example 1. The results thereof are listed in Table 1.

The raw material oil composition of Comparative Example 4 was subjected to a coking treatment for coking in the same manner as in Example 1, thereby obtaining a coking coal composition.

The obtained coking coal composition was pulverized with a hammer type mill such that the average particle diameter measured by a laser diffraction type particle size distribution measuring device reached 58.5 $\mu$m, thereby obtaining coking coal powder.

The surface area based on the volume of the coking coal powder (the surface area based on the volume of the raw material) was acquired in the same manner as in Example 1. The results thereof are listed in Table 1.

The obtained coking coal powder was put into a crucible made of graphite, embedded in an Acheson furnace with coke breeze, and graphitized at 3050°C. As the graphitization treatment, a treatment of increasing the temperature from room temperature to 3050°C for a heating time of 130 hours, holding the temperature at 3050°C for a holding time of 20 hours, and natural cooling for 25 days, and taking out the resultant was performed.

The obtained graphite powder was pulverized with an air flow jet mill such that the average particle diameter thereof measured by a laser diffraction type particle size distribution measuring device reached 26.5 $\mu$m, thereby obtaining a synthetic graphite material of Comparative Example 4.

The size L (112) of the crystallite, the surface area based on the volume, the oil absorption, the nitrogen adsorption specific surface area, and the difference between the surface area based on the volume of the raw material and the surface area based on the volume of the graphite of the obtained synthetic graphite material of Comparative Example 4 were acquired according to the same methods as in Example 1. The results thereof are listed in Table 1.

(Comparative Example 5)

The aromatic content of the fluid catalytic cracking residual oil (A) obtained in Example 2 and the saturated content of the vacuum residual oil (B) obtained in Example 1 were mixed at a mass ratio of 60:40 so as to be used as a raw material oil composition of Comparative Example 5. The normal paraffin content and the aromatic index fa of the raw material oil composition of Comparative Example 5 were respectively acquired according to the same methods as those in Example 1. The results thereof are listed in Table 1.

The raw material oil composition of Comparative Example 5 was subjected to a coking treatment for coking in the same manner as in Example 1, thereby obtaining a coking coal composition.

The obtained coking coal composition was pulverized with a hammer type mill such that the average particle diameter measured by a laser diffraction type particle size distribution measuring device reached 41.2 μm, thereby obtaining coking coal powder.

The surface area based on the volume of the coking coal powder (the surface area based on the volume of the raw material) was acquired in the same manner as in Example 1. The results thereof are listed in Table 1.

The obtained coking coal powder was put into a crucible made of graphite, embedded in an Acheson furnace with coke breeze, and graphitized at 3150°C. As the graphitization treatment, a treatment of increasing the temperature from room temperature to 3150°C for a heating time of 130 hours, holding the temperature at 3150°C for a holding time of 20 hours, and natural cooling for 25 days, and taking out the resultant was performed.

The obtained graphite powder was pulverized with an air flow jet mill such that the average particle diameter thereof measured by a laser diffraction type particle size distribution measuring device reached 10.3 μm, thereby obtaining a synthetic graphite material of Comparative Example 5.

The size L (112) of the crystallite, the surface area based on the volume, the oil absorption, the nitrogen adsorption specific surface area, and the difference between the surface area based on the volume of the raw material and the surface area based on the volume of the graphite of the obtained synthetic graphite material of Comparative Example 5 were acquired according to the same methods as in Example 1. The results thereof are listed in Table 1.

(Example 6)

The synthetic graphite material obtained in Example 3 was mixed with the synthetic graphite material obtained in Comparative Example 2 at a mass ratio of 50:50, thereby obtaining a synthetic graphite material of Example 6 which was formed of the mixture.

(Example 7)

The synthetic graphite material obtained in Example 3 was mixed with the synthetic graphite material obtained in Comparative Example 2 at a mass ratio of 30:70, thereby obtaining a synthetic graphite material of Example 7 which was formed of the mixture.

(Example 8)

The synthetic graphite material obtained in Example 3 was mixed with the synthetic graphite material obtained in Comparative Example 2 at a mass ratio of 20:80, thereby obtaining a synthetic graphite material of Example 8 which was formed of the mixture.

<Preparation of battery for evaluation>

The lithium ion secondary battery 10 shown in Fig. 1 was prepared as a battery for evaluation according to the method described below. As the negative electrode 11, the negative electrode current collector 12, the positive electrode 13, the positive electrode current collector 14, and the separator 15, those described below were used.

(Negative electrode 11 and negative electrode current collector 12)

Any of the synthetic graphite materials obtained in Examples 1 to 8 and Comparative Example 1 to 5, a carboxymethyl cellulose (CMC (BSH-6, manufactured by DKS Co., Ltd.)) aqueous solution as a binding agent adjusted to have a concentration of 1.5% by mass, and an aqueous solution in which styrene-butadiene rubber (SBR) as a binding agent was dispersed at a concentration of 48% by mass were mixed at a solid content mass ratio of 98:1:1, thereby obtaining a paste-like negative electrode mixture. The entire one surface of copper foil having a thickness of 18 μm serving as the negative electrode current collector 12 was coated with the obtained negative electrode mixture, dried, and rolled to obtain a negative electrode sheet in which the negative electrode 11 which was a layer formed of the negative electrode mixture was formed on the negative electrode current collector 12. The amount of the negative electrode mixture applied onto the negative electrode sheet per unit area was adjusted such that the mass of the graphite material reached approximately 10 mg/cm$^2$.

Thereafter, the negative electrode sheet was cut into a width of 32 mm and a length of 52 mm. Further, a part of the negative electrode 11 was scraped off in a direction perpendicular to the longitudinal direction of the sheet to expose the negative electrode current collector 12 functioning as a negative electrode lead plate.

(Positive electrode 13 and positive electrode current collector 14)

Lithium cobaltate LiCoO$_2$ (CELLSEED C10N, manufactured by Nippon Chemical Industrial Co., Ltd.) having an average particle diameter of 10 $\mu$m as a positive electrode material, polyvinylidene fluoride (KF# 1120, manufactured by Kureha Corporation) as a binding agent, and acetylene black (DENKA BLACK, manufactured by Denka Co., Ltd.) as a conductive assistant were mixed at a mass ratio of 89:6:5, and N-methyl-2-pyrrolidinone was added thereto as a solvent so that the mixture was kneaded, thereby obtaining a paste-like positive electrode mixture. The entire one surface of aluminum foil having a thickness of 30 $\mu$m serving as the positive electrode current collector 14 was coated with the obtained positive electrode mixture, dried, and rolled to obtain a positive electrode sheet in which the positive electrode 13 which was a layer formed of the positive electrode mixture was formed on the positive electrode current collector 14. The amount of the positive electrode mixture applied onto the positive electrode sheet per unit area was adjusted such that the mass of the lithium cobaltate reached approximately 20 mg/cm$^2$.

Thereafter, the positive electrode sheet was cut into a width of 30 mm and a length of 50 mm. Further, a part of the positive electrode 13 was scraped off in a direction perpendicular to the longitudinal direction of the sheet to expose the positive electrode current collector 14 functioning as a positive electrode lead plate.

(Separator 15)

As the separator 15, cellulose-based non-woven fabric (TF40-50, manufactured by Nippon Kodoshi Corporation) was used.

First, the negative electrode sheet in which the negative electrode 11, the negative electrode current collector 12, and the negative electrode lead plate were integrated with each other, the positive electrode sheet in which the positive electrode 13, the positive electrode current collector 14, and the positive electrode lead plate were integrated with each other, the separator 15, and other members used for the lithium ion secondary battery 10 were dried in order to prepare the lithium ion secondary battery 10 shown in Fig. 1. Specifically, the negative electrode sheet and the positive electrode sheet were dried at 120°C under reduced pressure for 12 hours or longer. Further, the separator 15 and other members were dried at 70°C under reduced pressure for 12 hours or longer.

Next, the negative electrode sheet, the positive electrode sheet, the separator 15, and other members which had been dried were assembled in an argon gas circulation type glove box at which the dew point was controlled to -60°C or lower. In this manner, as shown in Fig. 1, the positive electrode 13 and the negative electrode 11 were laminated so as to face each other through the separator 15 to obtain a single-layer electrode body fixed with polyimide tape (not shown). Further, the negative electrode sheet and the positive electrode sheet were laminated such that the peripheral edge portion of the laminated positive electrode sheet was disposed to be surrounded by the inside of the peripheral edge portion of the negative electrode sheet.

Next, the single-layer electrode body was accommodated in the aluminum laminate exterior 16, and an electrolytic solution was injected thereinto. An electrolytic solution obtained by dissolving lithium hexafluorophosphate (LiPF$_6$) as an electrolyte in a solvent at a concentration of 1 mol/L and further mixing vinylene carbonate (VC) with the solution at a concentration of 1% by mass was used as the electrolytic solution. A solvent obtained by mixing ethylene carbonate (EC) and ethyl methyl carbonate (EMC) at a volume ratio of 3:7 was used as the solvent.

Thereafter, the aluminum laminate exterior 16 was heat-fused in a state where the positive electrode lead plate and the negative electrode lead plate protruded.

By performing the above-described steps, the sealed lithium ion secondary batteries 10 of Examples 1 to 8 and Comparative Examples 1 to 5 were obtained.

<Charge and discharge test of battery for evaluation>

A charge and discharge test described below was performed on each of the lithium ion secondary batteries 10 of Examples 1 to 8 and Comparative Examples 1 to 5.

First, a preliminary test for detecting abnormalities in the batteries was performed. That is, each battery was placed in a thermostatic chamber at 25°C, charged with a constant current of 4 mA until the battery voltage reached 4.2 V, paused for 10 minutes, and discharged with the same constant current until the battery voltage reached 3.0 V. These charge, pause, and discharge were defined as one charge and discharge cycle, and the preliminary test was performed by repeating the charge and discharge cycle three times under the same conditions.

By performing this preliminary test, it was confirmed that all the batteries of Examples 1 to 8 and Comparative Examples 1 to 5 did not have abnormalities. Thereafter, the following main test was performed. In addition, the preliminary test is not included in the number of cycles of the main test.

In the main test, each battery was placed in a thermostatic chamber at 25°C, charged with a constant current at a constant voltage by setting the charging current to 30 mA, the charging voltage to 4.2 V, and the charging time to 3 hours, paused for 0 minutes, and discharged with the same charging current (30 mA) until the battery voltage reached 3.0 V. These charge, pause, and discharge were defined as one charge and discharge cycle, and the discharge capacity in the third cycle was defined as the "initial discharge capacity" by repeating the charge and discharge cycle three times under the same conditions.

Next, the battery was placed in a thermostatic chamber at a set temperature of 0°C and allowed to stand still for 5 hours, and the charge and discharge cycle was repeated 100 times under the same conditions as those for the charge and discharge cycle from which the initial discharge capacity was acquired. Thereafter, the battery was placed in a thermostatic chamber at 25°C again and allowed to stand still for 5 hours, the charge and discharge cycle was repeated three times under the same conditions as those for the charge and discharge cycle from which the initial discharge capacity was acquired, and the discharge capacity in the third cycle was defined as the "discharge capacity after charging and discharging of the battery were repeated at a temperature of 0°C".

As an index showing the capacity degradation after charging and discharging of the battery were repeated at a temperature of 0°C, the retention rate (%) of the "discharge capacity after charging and discharging cycles of the battery at a temperature of 0°C" with respect to the "initial discharge capacity" described above was calculated based on the following (Mathematical Formula 1).

The results thereof are listed in Table 1.

$$
\left\{ \begin{array}{l} \text{Retention rate of} \\ \text{discharge capacity} \\ \text{after repetition of} \\ \text{charging and} \\ \text{discharging of} \\ \text{battery at 0°C} \end{array} \right\} = \cfrac{\left(\begin{array}{l}\text{Initial}\\\text{capacity}\end{array}\right)}{\left\{\begin{array}{l}\text{Discharge capacity}\\\text{after repetition of}\\\text{charging and}\\\text{discharging of}\\\text{battery at 0°C}\end{array}\right\}} \times 100 \qquad \cdots \text{(Equation 1)}
$$

[Table 1]

| Example | Heavy oil composition | | Coking coal powder | Synthetic graphite material | | | | | Battery characteristics |
|---|---|---|---|---|---|---|---|---|---|
| | Normal paraffin content (% by mass) | Aromatic index (fa) | Surface area based on volume of raw material (m²/cm³) | L (112) (nm) | Surface area based on volume (m²/cm³) | Difference between surface area based on volume of raw material and surface area based on volume of graphite (m²/cm³) | Oil absorption (mL/100) | Nitrogen adsorption specific surface area (m²/g) | Discharge capacity retention rate after repetition of charging and discharging of battery at 0°C (%) |
| Example 1 | 18 | 0.55 | 0.286 | 4 | 1.698 | 1.412 | 73 | 7.2 | 95.1 |
| Example 2 | 5 | 0.3 | 0.232 | 8 | 0.297 | 0.065 | 67 | 3.1 | 97.3 |
| Example 3 | 12 | 0.43 | 0.328 | 14 | 0.534 | 0.206 | 104 | 5.1 | 98.7 |
| Example 4 | 20 | 0.65 | 0.181 | 19 | 0.828 | 0.647 | 147 | 8.2 | 95.4 |
| Example 5 | 9 | 0.59 | 0.164 | 30 | 0.221 | 0.057 | 128 | 3.6 | 96.2 |
| Comparative Example 1 | 35 | 0.48 | 0.315 | 4 | 1.556 | 1.241 | 61 | 8.4 | 87.3 |
| Comparative Example 2 | 15 | 0.23 | 0.346 | 11 | 0.465 | 0.119 | 53 | 3.4 | 62.6 |
| Comparative Example 3 | 4 | 0.39 | 0.222 | 24 | 0.282 | 0.060 | 86 | 2.4 | 68.2 |
| Comparative Example 4 | 2 | 0.72 | 0.119 | 32 | 0.281 | 0.162 | 173 | 5.3 | 72.5 |
| Comparative Example 5 | 25 | 0.63 | 0.170 | 15 | 0.798 | 0.628 | 165 | 8.7 | 82.3 |
| Example 6 | - - - | - - - | - - - | - - - | - - - | - - - | - - - | - - - | 95.0 |
| Example 7 | - - - | - - - | - - - | - - - | - - - | - - - | - - - | - - - | 93.8 |
| Example 8 | - - - | - - - | - - - | - - - | - - - | - - - | - - - | - - - | 91.2 |

As listed in Table 1, in each of the lithium ion secondary batteries of Examples 1 to 8 having a negative electrode containing the synthetic graphite material of the present invention, the "discharge capacity retention rate (%) after charging and discharging of the battery were repeated at a temperature of 0°C" was 90% or greater.

Based on this result, it was confirmed that in the lithium ion secondary battery using a negative electrode containing the synthetic graphite material of the present invention, the discharge capacity is unlikely to be degraded even in a case where the charge and discharge cycles are repeated at a temperature of 0°C or lower.

Further, as listed in Table 1, the discharge capacity retention rate of Example 3 was 98.7%, and the discharge capacity retention rate of Comparative Example 2 was 62.6%. Based on this result, it was confirmed that the additive property was not established in a case where a mixture of the synthetic graphite material of Example 3 and the synthetic graphite material of Comparative Example 2, which was the synthetic graphite material containing 50% by mass (Example 6) of the synthetic graphite material of Example 3, 30% by mass (Example 7) of the synthetic graphite material of Example 3, or 20% by mass (Example 8) of the synthetic graphite material of Example 3, was used. The reason for this is not clear, but there is a possibility that in the lithium ion secondary batteries of Examples 6 to 8, the lithium ions temporarily occluded in the synthetic graphite material of Example 3 were occluded in the synthetic graphite of Comparative Example 2 only by diffusion in the solid phase without the liquid phase (electrolytic solution).

Further, in the lithium ion secondary batteries of Comparative Examples 1, 2, 4, and 5 in which the synthetic graphite material having an oil absorption that was out of the range of the present invention was used and Comparative Example 3 in which the synthetic graphite material having a nitrogen adsorption specific surface area that was out of the range of the present invention was used, the "discharge capacity retention rates (%) after charging and discharging of the batteries were repeated at a temperature of 0°C" were less than 90%, which were lower than those of Examples 1 to 8.

[Industrial Applicability]

In the lithium ion secondary battery having a negative electrode containing the synthetic graphite material according to the present invention, degradation of the discharge capacity due to repetition of charging and discharging of the battery at 0°C is unlikely to occur. Therefore, the lithium ion secondary battery of the present invention can be preferably used for industrial purposes such as applications for automobiles such as hybrid automobiles, plug-in hybrid automobiles, and electric automobiles and power storage of system infrastructures.

[Reference Signs List]

10: Lithium ion secondary battery
11: Negative electrode
12: Negative electrode current collector
13: Positive electrode
14: Positive electrode current collector
15: Separator
16: Aluminum laminate exterior

**Claims**

1. A synthetic graphite material,

   wherein a size L (112) of a crystallite in a c-axis direction as calculated from a (112) diffraction line obtained by an X-ray wide angle diffraction method is in a range of 4 to 30 nm,
   a surface area based on a volume as calculated by a laser diffraction type particle size distribution measuring device is in a range of 0.22 to 1.70 $m^2/cm^3$,
   an oil absorption is in a range of 67 to 147 mL/100 g, and
   a nitrogen adsorption specific surface area is in a range of 3.1 to 8.2 $m^2/g$.

2. A production method of the synthetic graphite material according to Claim 1, comprising at least:

   a step of performing a coking treatment on a raw material oil composition by performing a delayed coking process to generate a coking coal composition;

a step of pulverizing the coking coal composition to obtain coking coal powder;
a step of performing a heat treatment on the coking coal powder to obtain graphite powder; and
a step of pulverizing the graphite powder.

3. The production method according to Claim 2,

wherein the raw material oil composition has a normal paraffin content of 5 to 20% by mass, and an aromatic index fa acquired by a Knight method is in a range of 0.3 to 0.65.

4. A negative electrode for a lithium ion secondary battery, comprising:
the synthetic graphite material according to Claim 1.

5. A lithium ion secondary battery comprising:
the negative electrode according to Claim 4.

FIG. 1

| | INTERNATIONAL SEARCH REPORT | International application No. |
|---|---|---|
| | | PCT/JP2020/000832 |

**A. CLASSIFICATION OF SUBJECT MATTER**
Int. Cl. G01B32/205(2017.01)i, H01M4/587(2010.01)i
FI: G01B32/205, H01M4/587

According to International Patent Classification (IPC) or to both national classification and IPC

**B. FIELDS SEARCHED**

Minimum documentation searched (classification system followed by classification symbols)
Int. Cl. C01B32/205, H01M4/587

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2012-099406 A (JX NIPPON OIL & ENERGY CORP.) 24 May 2012 | 1-5 |
| A | JP 2012-128973 A (JX NIPPON OIL & ENERGY CORP.) 05 July 2012 | 1-5 |
| A | WO 2012/020816 A1 (JX NIPPON OIL & ENERGY CORP.) 16 February 2012 | 1-5 |
| A | JP 2016-164862 A (SUMITOMO BAKELITE CO., LTD.) 08 September 2016 | 1-5 |
| A | JP 2012-216545 A (MITSUBISHI CHEMICAL CORP.) 08 November 2012 | 1-5 |

☐ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20.02.2020 | 10.03.2020 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

| | International application No. |
|---|---|
| | PCT/JP2020/000832 |

| Patent Documents referred to in the Report | Publication Date | Patent Family | Publication Date |
|---|---|---|---|
| JP 2012-099406 A | 24.05.2012 | US 2013/0244117 A1<br>WO 2012/060219 A1<br>CN 103283069 A<br>KR 10-2013-0106413 A | |
| JP 2012-128973 A | 05.07.2012 | US 2013/0273432 A1<br>WO 2012/081439 A1<br>CN 103262315 A<br>KR 10-2014-0041400 A | |
| WO 2012/020816 A1 | 16.02.2012 | US 2013/0251620 A1<br>EP 2605318 A1<br>CN 103155245 A<br>KR 10-2013-0097181 A | |
| JP 2016-164862 A | 08.09.2016 | WO 2016/031854 A1<br>TW 201622217 A<br>CN 106575769 A<br>KR 10-2017-0032440 A | |
| JP 2012-216545 A | 08.11.2012 | WO 2012/133788 A1<br>CN 103443977 A<br>KR 10-2014-0016925 A | |

Form PCT/ISA/210 (patent family annex) (January 2015)

**EP 3 912 961 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019004662 A

- JP 5415684 B

### Non-patent literature cited in the description

- The 51st Battery Symposium. 08 November 2010

- Carbon Material for Negative Electrode for Lithium Ion Secondary Batteries. Realize Corporation, 20 October 1996, 3-4
- *Carbon,* 1981, 73-81